# EUROPEAN PATENT SPECIFICATION

(11) **EP 1 421 144 B1**
(45) Date of publication and mention of the grant of the patent: **07.05.2008**
(21) Application number: 02750959.5
(22) Date of filing: 21.05.2002
(51) Int. Cl.: C09D 4/00

(54) **METHOD FOR PROTECTING A FLOORING OR LINING MATERIAL FROM STAINING SUBSTANCES**
VERFAHREN ZUM SCHUTZ EINES BODENBELAG- ODER AUSKLEIDUNGSMATERIALS VOR BEFLECKENDEN SUBSTANZEN
PROCEDE POUR PROTEGER UN SOL OU MATERIAU DE REVETEMENT CONTRE DES PRODUITS TACHANTS

(30) Priority: 04.07.2001 IT MI20011411
(43) Date of publication of application: 26.05.2004
(73) Proprietor: Lafabrica S.R.L., 40033 Casalecchio di Reno - Bologna (IT)
(72) Inventor: MAZZANTI, Raffaello, I-40067 Rastignano (IT)
(74) Representative: De Gregori, Antonella
(86) International application number: PCT/EP2002/005558
(87) International publication number: WO 2003/008506

(56) References cited:
- WO-A-02/24343
- DE-A- 10 018 645
- US-A- 3 935 364
- US-A- 4 170 663
- US-A- 6 096 383
- DATABASE WPI Section Ch, Week 198521 Derwent Publications Ltd., London, GB; Class A97, AN 1985-126613 XP002263590 & JP 60 065783 A (NIPPON KOSHITSU TOK), 15 April 1985 (1985-04-15)

## Description

The present invention relates to a method for protecting a flooring or lining material from soiling and staining substances.

In particular, the present invention relates to a method for reducing soiling and staining of polished porcelain stoneware by means of a treatment, which facilitates the removal of dirt and various kinds of stains.

It is known that flooring and lining materials and in particular heterophasic ceramic materials and natural stones have a microporosity with a widely varying distribution and dimensions.

When this porosity is present on the surface, the ceramic material can be easily stained and/or soiled.

The morphology of the surface pores can therefore cause semi-permanent or permanent soiling or staining and in the case of contact with indelible products, it is extremely difficult to remove the stains formed.
It should be noted that the term "to polish" as used in the description of the invention, indicates a surface treatment that includes polishing, smoothing, lapping, brushing and the like. This problem is particularly relevant for polished porcelain stoneware, a material that is currently widely used in commercial and residential buildings for flooring and lining.

Although this ceramic material has a minimum porosity and is therefore particularly suitable for flooring, it has insufficient stain-proof characteristics.

Although natural porcelain stoneware (not polished) has extremely reduced open porosity values which give the tile good stain-proofing, its internal closed porosity values are generally close to 4-8% with a pore dimension varying from 1 to 100 µm. This porosity is exposed during polishing of the tile, when 0.5-2 mm of superficial material is removed. Although polishing gives porcelain stoneware an aesthetically valuable mirror effect, it increases its stainability.

In particular, polished porcelain stoneware becomes particularly sensitive to impregnating products of common domestic use such as felt-tip pens, indelible ink pens, shoe-polish, as well as common staining food agents such as coffee and tea. It is also increased its sensitivity regarding soiling, for example dirty caused by stamping.

In order to solve problems related to staining and soiling of ceramic materials and in particular those commonly used for flooring, resort is currently made to specific pre- or post-laying treatment.

For both kinds of treatment, formulations containing silicone-based and/or fluorinated derivatives or waxes in aqueous dispersion or in solution with a suitable solvent, are generally used.

These liquid formulations are applied to the surface of ceramic materials to provide adequate impermeability characteristics. After application, the solvent or dispersing system is removed or left to evaporate, leaving a deposit of inert material in the pores of the ceramic material treated.

Although this inert material consists of a physical-type barrier that provides certain protection from soiling and staining agents, it has the disadvantage of not being firmly linked within the surface porosity of the substrate and is therefore removed as a result of washing and/or abrasion.

The difficulties connected with a rapid and effective removal of stains and heavy dirt have, at present, limited a wider distribution in the use of ceramic materials with open surface porosities and in particular polished porcelain stoneware.

An example of post-laying treatment is disclosed in US-A-6 096 383 concerning UV-curable composition for coating ceramic.

There is a clear demand for ceramic materials that combine the high aesthetical qualities of polished porcelain stoneware with the easy cleanability of other types of materials (for example natural porcelain stoneware) used for the flooring of houses and commercial buildings (for example, airports, mall, schools, etc.).

One of the general objectives is therefore to eliminate or significantly reduce the drawbacks described above.

Another of the general objectives of the present invention consists in providing a method for protecting flooring or lining materials from soiling and staining agents, which is versatile, easy to effect and without high production costs.

A further objective of the present invention consists in the production of a ceramic material, which cannot be easily attacked by external agents and, in the case of necessity, allows an effective and rapid removal of dirt and stains from the surface.

Yet another objective of the present invention consists in providing a method for giving ceramic materials in general and in particular porcelain stoneware, glazed porcelain stoneware, cement and resin-based composites, burned-clay (terracotta) and natural stones such as granite and marble, long-lasting stain-proofing characteristics. All substrates mentioned above may be natural or with a surface treatment such as polishing, lapping, smoothing, brushing.

A last but not less important objective of the present invention consists in supplying polished porcelain stoneware with reduced soilability and stainability and which is therefore also suitable for the flooring of environments with a high soiling risk such as kitchens, bathrooms, children's rooms and commercial buildings. In view of these objectives and others which will appear evident in the following description, a first aspect of the present invention relates to a method for protecting a ceramic material from staining or soiling substances as claimed in claim 1.

With the method according to the invention, it is possible to treat and reduce the soilability and stainability of flooring and lining materials of varying kinds and origins, such as ceramics, glazed ceramics, porcelain stoneware, glazed porcelain stoneware, cement and resin-based composites, burned-clay (terracotta) and natural stones such as granite and marble. Materials listed above may be with no surface treatment or with a surface treatment such as polishing, smoothing, lapping, brushing and the like.

Particularly encouraging results have been obtained by treating polished porcelain stoneware, as the removal of soil, stains and accidental coloring from this untreated ceramic is particularly difficult.

The photocurable composition can be applied to the material to be treated by means of one or more of the following application technologies: roll-, film-, spray-, pallet-, disk-techniques or by means of a brush or vacuum technology.

In accordance with an embodiment of the invention, a quantity of photocurable composition ranging from 1 to 25 g/m² is applied to the material to be treated, as uniformly as possible along the whole surface area.

In particular, in the case of the treatment of polished porcelain stoneware and material with reduced opened porosity, it is preferable to apply a quantity of photocurable composition ranging from 0.5 to 10 g/m² whereas when porous ceramic materials, such as burned-clay, natural stones and cement and resin-based composites, are treated, it is preferable to apply a quantity of photo-curable composition ranging from 2 to 15 g/m².

This way, a single layer of coating is obtained, which covers the surface and porosities of the flooring and lining substrate treated.

The photocurable composition of the invention, in fact, comprises at least one reactive component, advantageously a monomer or oligomer or their mixtures, which hardens after the photocuring reaction, firmly adhering to the substrate to which it is applied, sealing the porosity and thus providing the required anti-stain and anti-soiling characteristics.

The term photocuring reaction refers to the curing and hardening of the reactive component, obtained as a result of exposure to radiation preferably having a wavelength ranging from 100 to 780 nm, more preferably from 250 to 460 nm. In particular, the exposure to UV rays is particularly suitable for reaching, in a short period of time and with low costs, a high curing degree of the reactive components contained in the photocurable composition.
The reactive components can be subdivided into two main categories: the group of radicalic systems and of cationic systems.
The compounds belonging to the radicalic group contain an ethylenically unsaturated group. The compounds having an ethylenically unsaturated group may be an oligomer or a monomer. The oligomers is a compound having two or more ethylenically unsaturated group within one molecule and governing various properties of cured compound obtained by radical polymerization, such as abrasion resistance, durability, weatherability, adhesion, etc.
The monomer is further classified into a monofunctional monomer having one unsaturated group and a polyfunctional monomer having two ore more unsaturated groups.

It should be noted that the term (meth)acrylate as used in the description of the invention, indicates both acrylates and methacrylates.

Specific examples of the oligomers having an ethylenically unsaturated group for use in the present invention include an unsaturated polyesters resin (UPES) (for example Roskydal 300, 502, 700, BAYER; Alpolith 303 Hoechst; Distitron VE100, 417, 191, LONZA) an epoxy (meth)acrylate resin (for example Ebecryl 600, 3200, 3500, UCB Chemicals; CRAYNOR CN104, CN116, CN154, CN132, CN133, ATOFINA), a urethane (meth)acrylate resin (for example, Ebecryl 230, 270, 1290, 5129, UCB Chemicals; CRAYNOR CN965, CN966, CN963, CN975, ATOFINA); a polyester (meth)acrylate resin (for example Ebecryl 80, 81, 83, 84, UCB Chemicals), an amine modified polyester (meth)acrylate resin, a polyether (meth)acrylate resin (for example CRAYNOR CN501, CN502, CN551, CN552, ATOFINA), an acrylic (meth)acrylate (for example Ebecryl 745, 767, UCB Chemicals), a polybutadiene (meth)acrylate resin (for example CRAYNOR 301, 303, ATOFINA), a silicone (meth)acrylate resin, etc..

This photocurable composition advantageously includes a reactive diluent (monomer) which can act both as a diluent for the viscosity control of the composition, and as a reagent which intervenes in the photocuring process, thereby improving workability, penetration into the porosities, etc.

The monofunctional monomers, which can be used within the scope of the invention include:
a) Monofunctional monomers, preferably selected from:
   - vinyls for example styrene;
   - (meth)acrylates for example Ebecryl 110, 112, 114, UCB Chemicals; SR335, SR395, SR489, SR256, SR504, SR285, SR339, SR506, ATOFINA; IBOA, ODA-N or
b) Polyfunctional monomers, selected from bifunctional, (for example Ebecryl 150, UCB Chemicals; SR238, SR268, SR272, SR306, SR508, SR259, SR344, SR610, SR9003, SR349, SR602, ATOFINA; DPGDA, HDDA, TPGDA) and others (for example Ebecryl 40, 140, 160, UCB Chemicals, SR295, SR351, SR444, SR355, SR399, SR415, SR454, SR492, SR9020, SR9021, ATOFINA; DPHPA, OTA, TMPTA).
The prepolymers which can be used, belonging to the group of cationic systems also comprise epoxy monomers and oligomers (for example CYRACURE UVR6105, UVR6110, UVR6128, UVR6000, UVR6100, UVR6216, UNION CARBIDE, limonene dioxide, linseed oil epoxide-LOE); polyols (for example TONE series 200, 300, UNION CARBIDE); epoxy silicones (for example UV 9600 series, GE Bayer Silicones); vinyl-ethers (for example RAPICURE, ISP Chemicals); glycols (for example PEG with varying molecular weights). A wide variety of commercial epoxy resins are available and listed in "Handbook of Epoxy Resins" by Lee and Neville, McGraw Hill Book Company, New York (1967).
The photocurable composition of the present invention may be a hybrid mixture containing both radicalic and cationic systems.

The formulations containing the above compounds can also be classified on the basis of the following classification:
- With solvent
- 100% photo-curable (preferred)
- Aqueous based (dispersion or emulsion).
The photocurable composition of the present invention is in the form of a solvent free material but may also be used by diluting it with a solvent as conventionally employed. In this case, the solvent used may be a solvent commonly used in conventional coating materials and examples thereof include aromatic hydrocarbons such as toluene and xylene; alcohols such as ethanol, 2-propanol and 1-butanol; ketones such as methyl ethyl ketone and methyl isobutyl ketone; ethers such as diethylene glycol dimethyl ether and triethylene glycol dimethyl ether; esters such as ethyl acetate and butyl acetate; and monoethers of ethylene glycol such as methyl cellosolve and ethyl cellosolve. These solvents may be used individually or in combination of two or more thereof. The organic solvent is used so as to reduce the viscosity of the composition and improve the workability. Moreover the photo-curable composition of the present invention may be in the form of an aqueous or aqueous/solvent dispersion or emulsion.
In the formulation of the photocurable compositions of the invention there are also advantageously one or more photoinitiators, co-initiators, synergic agents.

Photoinitiators for free radical polymerization which can be used, for example, are alpha-hydroxyketones (for example IRGACURE 184, 2959, DAROCUR 1173, Ciba Specialty Chemicals; ESACURE KIP 150, LAMBERTI S.P.A.), alpha-aminoketones (for example IRGACURE 907, 369, Ciba Specialty Chemicals; ESACURE 1001 LAMBERTI SPA), acylphosphinoxides (for example IRGACURE 819, 1800, 1850, 1700, Ciba Speciality Chemicals); LUCIRIN TPO, TPO-L, BASF), thioxanthones (for example SPEEDCURE ITX, DETX, CTX, CPTX, LAMBSON), benzophenones (for example ESACURE TZT, TZM, LAMBERTI SPA; benzophenone, substituted benzophenones), oxime-esters, anthracenes, benzyl-dimethyl-ketals (for example IRGACURE 651, Ciba Specialty Chemicals; ESACURE KB1, LAMBERTI), phenyl-glyoxylates (for4 example Darocur MBF, Ciba Specialty Chemicals) synergic amines (for example SPEEDCURE EDB, EHA, DMB, PDA, LAMBSON), tertiary amines.
Photoinitiators for cationic polymerization include all substances, which liberate Lewis or Bröensted acid upon exposure to actinic radiation. Cationic photoinitiating systems which are particularly useful in the composition of the present invention are arylsulfonium salts, especially the triarylsolfonium salts for example CYRACURE UVI 6976, 6992, UNION CARBIDE; Sp-55, 150, 170, Asahi Denka) and aryl-iodonium salts (for example CGI 552, Ciba Specialty Chemicals; CD1012, SARTOMER) and metallocenes (for example IRGACURE 261, Ciba Specialty Chemicals).
The photocurable composition of the present invention may contain filler/s for the purpose of increasing abrasion resistance and adhesion to the porosities. Specific examples of fillers include inorganic fillers such as calcium carbonate, aluminum hydroxide, calcium sulfate, barium sulfate, talc, alumina, silicon dioxide, glass powder, ceramic powder etc. and organic fillers: organic polymers such as Teflon, polystyrene resin, polyurethane resin, polyvinylacetal resin, polyvinylbutyral resin, saturated polyester resins, chlorinated polyolefin; rubber components such as butadiene rubber, styrene-butadiene rubber, nitrile rubber and acryl rubber; various type of thermoplastic elastomers such as polystyrene type, polyolefin type, polydiolefin type, polyurethane type, and polyester type; and homopolymers and copolymers of (meth)acrylic acid alkyl ester such as polyethyl(meth)acrylate and polybutyl(meth)acrylate.
The above listed compounds may be used in a form of nanoparticles.
The photocurable composition of the present invention may contain a thermal polymerization inhibitor for the purpose of preventing polymerization during the storage. Specific examples of the thermal polymerization inhibitor, which might be added to the photocurable composition of the present invention, include p-methoxyphenol, hydroquinone, alkyl-substituted hydroquinone, catechol, tert-butyl cathecol and phenotiazine.
The photocurable composition of the present invention may of course contain organic peroxide such as thermo polymerization initiator for the purpose of accelerating curing and allowing curing were light can not penetrate into the formulation. Specific examples of the organic peroxide include benzoyl peroxide, dicumyl peroxide, di-tert-butyl peroxide, tert-butyl peroxybenzoate, tert-butyl peroxy-2-ethylexanoate, tert-butyl peroxylaurate, tert-butyl hydroperoxide, dicumil hydroperoxide, 3,3,5-trymethylhexanoyl peroxide, diisopropyl peroxydicarbonate. In order to accelerate the curing, a cobalt salt such as cobalt naphtenate and cobalt octylate, or an amin compound such as dimethylaniline, might be used in combination with above described organic peroxide.
The photocurable composition of the present invention may further contain general additives for coating materials so as to improve workability and physical properties of the formulation before and after curing. Examples of the additives include:
Adhesion promoters (for example CN704, CN736, CN9050, CN9051, ATOFINA), wetting agents, surface-active agents (for example Silwet, Silquest, CoatOSil, WITCO; BYK 3500, 3510, 3530, 3570, 310, 306, 307, 333, 341, 344, P104, 104S, 105, 220S, Lactimon, BYK Chemie), bactericides (for example IRGASAN, Ciba Speciality Chemicals), fluorinated monomers (for example 1H,1H,2H,2H-hepta-fluorodecyl-acrylate, 2-(perfluorobutyl)-ethyl acrylate, 2-(perfluorodecyl)-ethylacrylate DAIKIN; ZONYL Dupont), abrasion resistance agents (for example BYK 306, 307, 310, 333, 341, BYK Chemie), dispersing agents, viscosity modifiers
Furthermore, the photocurable composition of the present invention may contain an antioxidant, a photostabilizer or an ultraviolet absorbent for the purpose of preventing photodeterioration after curing the composition into the porosities. Examples of the antioxidants include hindered phenol type antioxidants such as 2,4,6-tri-tertbutylphenol, 2,6-di-tert-butyl-p-cresol, N,N'-hexamethylene bis(3,5-di-tert-butyl-4-hydroxy-hydrocinammide, octadecyl-3(3,5-di-tert-butyl-4-hydroxyphenyl)propionate, 3,5-di-tert-butyl-4-hydroxybenzylphosphonate-diethyl ester, isooctyl-3-(3,5-di-tert-butyl-4-hydroxyphenyl)propionate, and tris (3,5-di-tert-butyl,4,hydroxybenzyl)isocyanurate; phosphite-type antioxidants such as triphenylphosphite, tris(2,4-di-tert-butylphenyl)phosphite, tris(nonylphenyl)phosphite, dipheninylisodecylphosphite, phenyldiisodecylphosphite, cyclic neopentane-tetrayl bis(octadecylphosphite) and 2,2-methylene bis (4,6-di-tert-butylphenol)octylphosphite; and thioether-type antioxidants such as dilauryl 3,3'-thiodipropionate, dimyristyl 3,3-thiodipropionate and pentaerythryl tetrakis(3-laurylthioproponate).
Examples of the photostabilizers include hindered amine-type photostabilizers such as bis(2,2,6,6-tetramethyl-4-piperidyl)sebacate, bis(1,2,2,6,6-pentamethyl-4-piperidyl)sebacate, bis (1,2,2,6,6-pentamethyl-4-piperidyl)-2-(3,5-di-tert-butyl-4-hydroxybenzyl)-2-n-butylmalonate and 4-benzoyloxy-2,2,6,6-tetramethylpiperidine.
Examples of the ultraviolet absorber include benzotriazole-type compounds such as 2-(3,5-di-tert-butyl-2-hydroxyphenyl)benzotriazole, 2-(3-tert-butyl-5-methyl-2-hydroxyphenyl)benzotriazole and 2-(3,5-di-tert-amyl-2-hydroxyphenyl)benzotriazole; benzoate-type compounds such as 2,4-di-tert-butyl-phenyl-3,5-di-tert-butyl4-hydroxybenzoate; salicylate-type compounds such as p-tert-buthylphenylsalicylate and p-octylphenylsalicylate; benzophenone-type compounds such as ethyl-2-cyano-3,3'-diphenil acrilate and 2 ethylhexyl-2-cyano-3,3'-diphenyl acrilate, and metal complexes such as nickel bis(octylphenyl)sulfide and nickel dibutyldithiocarbamate.

An embodiment of the method of the invention comprises an initial application phase of the photocurable composition on the surface of the material to be treated and subsequent radiation by means of an appropriate light source ranging from 100 to 780 nm which effects first the curing and then the hardening of the formulation. The hardened surface polymeric layer is then removed, for example by machining (with abrasives) and the treated material is subsequently transferred for a further processing phase.

According to a preferred embodiment of the method of the invention, the photocurable composition is initially applied to the surface of the material to be treated, using for example a roller and ensuring its penetration in the surface porosity, and the excess surface quantity applied is subsequently removed, for example by means of a doctor blade or roller, the excess non-cured product being transferred for recycling. The photocurable composition applied is then subjected to a radiation ranging from 100 to 780 nm, suitable for curing the photocurable composition. Any possible surface excess of the cured product can be removed using a roller or disk made of abrasive material (of the Scotch Brite type), and after the hardening of the polymer of said composition, the treated material is transferred for further possible processing or finishing phases.

According to another embodiment of the invention, the curing composition is applied and subjected to radiation by means of a suitable light source ranging from 100 to 780 nm until the curing and hardening is completed. Following the curing process, a surface polymeric layer is formed, which is left unaltered or, optionally, removed at the moment the material is laid.

The use of the photocurable technology within the scope of the method of the invention allows an effective curing of the formulation applied with a consequent sealing of the surface porosity of the material treated.

Furthermore, the use of the photocurable technology makes the method of the invention extremely versatile enabling it to be included in the common processing procedures of ceramic materials. In the specific case of polished porcelain stoneware, it is possible to carry out the method of the invention after the smoothing phase, following possible drying treatment to eliminate the presence of residual water. The drying before the protective treatment of the material can be effected by forced hot air ventilation, with the use of an IR lamp or alternative technologies.

According to an embodiment of the invention, before the drying, it may be convenient to treat the substrate with a solution of a weak, non-aggressive acid, (for example sulfamic acid, diluted hydrochloric acid, etc.) which allows the removal of the polishing residues, for example magnesium carbonate without damaging the substrate itself. This acid treatment process allows better stain-proofing protection results to be obtained.

The method of the invention is advantageously carried out in line with treatment operations of building materials suitable for flooring or lining, or, alternatively, in the finishing phase for third parties.

According to an embodiment, the method of the invention can also be used out of line, after the laying of the material itself, resorting to the use of appropriate equipment.

If the material is treated after the laying, the applicative system is conveniently modified with respect to the on line application.

In particular, the feed voltage of 220 V, with respect to the more common voltage of 380 V of industrial application, requires a specific system. In addition to the feed voltage, it is also necessary to reduce the emission of heat and ozone of the UV source, resorting to the use of appropriate sources such as:
- 1 or more Hg lamps with an arc of 1 to 50 cm, having a power varying from 40-200 W/cm
- Mono phase feed of 220 V

It may also be convenient to use a much less viscous and more reactive formulation of the on line application to compensate for the lower efficiency of the mobile UV source. A further expedient for the mobile system comprises the use of a UV source assembled on a swing arm to allow the radiation of difficult areas.

Before application, the substrate to be treated must be accurately washed to eliminate all dirt or other residues inside the pores, and must be subsequently dried.

The application of the formulation can be effected manually by means of a roller completely analogous to those used for spreading wall painting, and the product is then uniformly spread onto the surface of the lining using a rubber doctor blade to push it inside the pores. The excess can be subsequently removed with a polisher (of the single-brush type) equipped with soft felt. The application is followed by the curing phase using the mobile UV system, which can be motorized, or manual with friction to guarantee a correct advance rate.

According to an embodiment of the invention an integrated system is provided, suitable for applying the curing formulation of the invention with subsequent radiation, obtaining the hardened product inside the surface porosities.

The use of the photocurable technology enables high drying rates, allowing a flow ranging from 1 to 200 m/min of material to be treated, enabling direct on-line production use, as the other operations such as smoothing, are effected at lower rates, generally ranging from 4 to 15 m/min.

The application phases of the composition, possible removal, radiation and curing, can be repeated once or several times on a single material to be treated, in order to obtain a complete sealing of the pores present in the material itself.

The embodiment of the method of the invention comprises the use of light sources advantageously having an emission of 100 to 780 nm, preferably with a wavelength ranging from 250 to 460 nm.
The light source, which emits ray absorbed by photoinitiator, can be used to cure the photocurable composition of the present invention. Examples of the light source include a medium pressure mercury lamp, a high pressure mercury lamp, a metal halide lamp, a excimer lamp, a short arc metal lamp, a short arc metal halide lamp, a flash lamp, a xenon lamp, a fluorescent lamp and sunlight. When these light sources are used, the expose energy needed for curing the photocurable coating composition of the present invention is in a range from 0.01 to 3 J/cm², preferably in a range from 0.05 to 1.5 J/cm².
The light sources can differ depending on the type of ignition, arc or microwaves and emission spectrum, Hg or Hg doped with Ga, Ta, Pb, Fe, and other doping agents.

As an example, fluorescent lamps which can be used are fluorescent lamps TL03 or TL05 of Philips, medium pressure lamps or complete systems produced by FUSION, IST, HERAEUS, PHILIPS, AMBA, THEIMER, SYLVANIA, high pressure lamps of FUSION, IST, HERAEUS, PHILIPS, AMBA, THEIMER, SYLVANIA, excimer lamps, so-called cold lamps or monochromatic sources such as lasers. According to another aspect, the present invention provides the use of a photocurable composition of the type previously described for reducing the soilability and/or stainability of materials for flooring and/or lining, in which said composition is applied to the surface of said materials and cured by exposure to light radiation ranging from 100 to 780 nm, said radiation preferably consisting of UV rays.

Further characteristics and advantages of the invention are evident in the description of an apparatus and method for protecting flooring or lining material from staining substances, illustrated in but not limited by the enclosed drawings, in which:
Figure 1 is a schematic reproduction of an apparatus for the embodiment of the method of the invention,
Figure 2 illustrates a second embodiment of an apparatus for treating substrates according to the invention, in which the same reference numbers are maintained, indicating the same units as the previous figure.

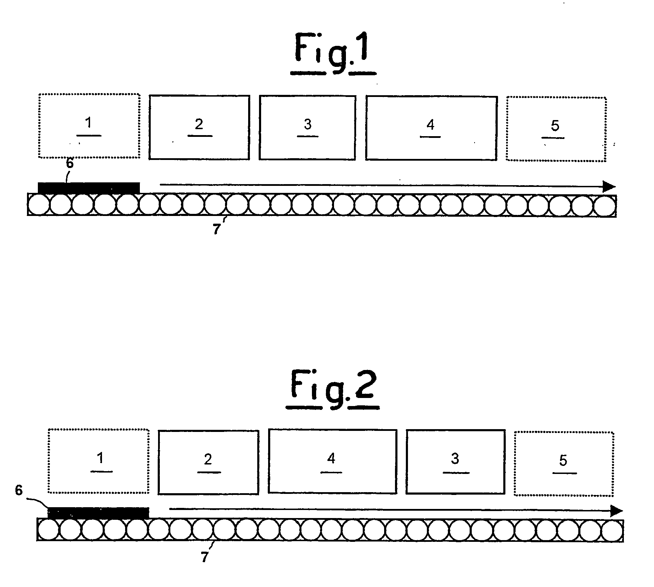

With reference to figure 1 above, the flooring material 6 is carried by a conveyor belt 7 along a series of processing stations 1-5 in which the material is treated. In particular, the flooring or lining material is initially dried in a drying unit 1 by means of forced hot air ventilation and then transferred to the application unit 2 where a layer of photocurable composition is applied by means of a roller. The surface-impregnated material is then transferred to the unit 3 in which the excess composition is removed with a roller and is then sent to the photocurable unit 4 where there are UV lamps. Exposure to the ultraviolet rays causes the curing of the reactive component(s) of the formulation, sealing the open surface porosities of the material treated. At the end of the hardening process the material is passed to the polishing unit 5 in which it is polished with a brush machine.

Figure 2 illustrates an apparatus for the treatment of flooring and lining materials comprising the same units and treatment zones 1-5 shown in Figure 1 arranged in a slightly different order. In particular, the removal unit 3 of the excess composition is positioned after the photocuring unit. In this case, the removal phase is effected by abrasive machining inside unit 3 and is followed by the polishing phase 5.

The following examples are provided for illustrative purposes of the present invention only and in no way limit its protective scope, which is defined in the enclosed claims.

### EXAMPLE 1

Two photocurable compositions 1 and 2 according to the invention were prepared, based on the combination of a monomer with an initiator and additives.

| Composition 1 | % | Composition 2 | % |
|---|---|---|---|
| DPGDA | 92-98 | TPGDA | 92-98 |
| DAROCUR 1173 | 1-6 | DAROCUR 1173 | 1-6 |
| Silwet L-7608 | 0.2-2 | Coatosil 3501 | 0.2-2 |
| BYK UV-3510 | 0.2-2 | BYK UV-3500 | 0.2-2 |

### EXAMPLE 2

Two photocurable compositions 3 and 4 were prepared, comprising a first bifunctional monomer, a second trifunctional monomer combined with an initiator and additives.

| Composition 3 | % | Composition 4 | % |
|---|---|---|---|
| DPGDA | 40-90 | TPGDA | 40-90 |
| TMPTA | 5-55 | TMPTA | 5-55 |
| IRGACURE 2020 | 1-6 | IRGACURE 184 | 1-6 |
| TINUVIN 400 | 1-2 | BYK UV-3500 | 0.2-2 |
| TINUVIN 292 | 1-2 | | |
| BYK UV-3510 | 0.2-2 | | |

### EXAMPLE 3

Two photocurable compositions 5-6 according to the invention were prepared, based on the combination of a monomer, a resin, an initiator and additives.

| Composition 5 | % | Composition 6 | % |
|---|---|---|---|
| DPGDA | 50-90 | Roskydal 1502 | 97-99 |
| EB 1290 | 5-45 | IRGACURE 2020 | 1-6 |
| IRGACURE 2020 | 1-6 | TINUVIN 400 | 1-2 |
| TINUVIN 400 | 1-2 | TINUVIN 292 | 1-2 |
| TINUVIN 292 | 1-2 | Coatosil 1301 | 0.2-2 |
| Silwet L-7607 | 0.2-2 | BYK UV-3500 | 0.2-2 |
| BYK UV-3510 | 0.2-2 | | |

### EXAMPLE 4

Two photocurable compositions 7-8 according to the invention were prepared, based on the combination of a monomer, a resin, an initiator, a filler and additives.

| Composition 7 | % | Composition 8 | % |
|---|---|---|---|
| DPGDA | 50-90 | SR 833S | 10-50 |
| EB 4858 | 5-45 | CN 104D80 | 50-90 |
| IRGACURE 2020 | 1-6 | DAROCUR 1173 | 1-2 |
| TINUVIN 400 | 1-2 | Aerosil 200 | 5-20 |
| TINUVIN 292 | 1-2 | BYK 306 | 0.2-2 |
| Aerosil 200 | 5-20 | | |
| BYK UV-350 | 0.2-2 | | |

### EXAMPLE 5

Two photocurable compositions 9 and 10 were prepared, incorporating cationic photocurable systems.

| Composition 9 | % | Composition 10 | % |
|---|---|---|---|
| UVR 6000 | 40-98 | UVR 6100 | 40-98 |
| UVR 6105 | 0-58 | UVR 6105 | 0-58 |
| Limonene dioxide | 0-20 | Limonene dioxide | 0-20 |
| TONE 0301 | 0-20 | CGI 552 | 1-5 |
| CGI 552 | 1-5 | UVI 6992 | 1-10 |
| UVI 6992 | 1-10 | Silquest A-187 | 0.2-1 |
| Coatosil 1770 | 0.2-1 | | |

### EXAMPLE 6

Two photocurable compositions 11 and 12 were prepared, incorporating a fluorinated monomer according to the invention.

| Composition 11 | % | Composition 12 | % |
|---|---|---|---|
| DPGDA | 50-90 | SR 833 S | 10-50 |
| EB 1290 | 5-45 | CN 104D80 | 50-90 |
| 2-(Perfluorodecyl) | | IRGACURE 2010 | 1-5 |
| ethyl acrylate | 0-2 | 2-(Perfluorodecyl) | |
| IRGACURE 2020 | 1-6 | ethyl acrylate | 0-2 |
| TINUVIN 400 | 1-2 | TINUVIN 400 | 1-2 |
| TINUVIN 292 | 1-2 | TINUVIN 292 | 1-2 |
| Silwet L-7608 | 0.2-2 | ESACURE TZT | 1-5 |
| UV-3500 | 0.2-2 | BYK 306 | 0.2-2 |

### EXAMPLE 7

Two photocurable hybrid compositions 13 and 14 were prepared, incorporating both cationic and radicalic systems.

| Composition 13 | % | Composition 14 | % |
|---|---|---|---|
| UVR 6000 | 50-90 | UVR 6000 | 50-90 |
| UVR 6105 | 0-40 | UVR 6105 | 0-40 |
| CY 132 | 5-20 | UVACURE 1561 | 5-20 |
| TONE 0301 | 0-10 | TONE 0301 | 0-10 |
| CGI 552 | 0.5-3 | CGI 552 | 0.5-3 |
| UVI 6992 | 0.5-3 | UVI 6992 | 0.5-3 |
| DAROCUR 1173 | 0.5-4 | DAROCUR 1173 | 0.5-4 |
| Coatosil 1770 | 0.2-2 | Aerosil 200 | 5-10 |
| | | Coatosil 1770 | 0.2-2 |

### EXAMPLE 8

Compositions 1-14 according to the invention were tested on the following substrates:

| Sample | Substrate | Reported |
|---|---|---|
| N. | | results |
| 1 | Polished porcelain stoneware | Table 1 |
| 2 | Polished glazed porcelain stoneware | Table 2 |
| 3 | Cement marble composite | Table 3 |
| 4 | Marble | Table 4 |
| 5 | Burned-clay | Table 5 |

The substrates were treated as follows; the photo-curable compositions 1-14 were dripped onto the substrates (the porcelain stoneware samples were previously treated with an acid solutions as described above) and applied by means of a rubber doctor blade in order to push the product into the open porosities of the material. The excess surface layer was subsequently removed with soft paper. The visual appearance of the substrate before the photocuring was not substantially different from the untreated material.
In order to test chemical-physical properties of the polymerized composition, a 10 µm film of the photocurable composition was applied on a third of the surface of the same tile. Film was applied using a 10 µm wire bar. The film was tested for adhesion, scratch resistance, abrasion resistance, chemicals and stain resistance.

The photocuring was carried out using a UV laboratory belt unit with the following characteristics:
- Medium pressure lamp (Hg);
- Power applied: 120 W/cm;
- Belt speed: 10 m/min.

The completion of the photocuring was tested by means of the Cross Hatch test on the surface film of the substrates (according to the method described in Example 8).

The substrates were also analyzed using a SEM (scanning electron microscope), which clearly showed the microporosities sealed by the composition of the present invention.

The results of the stain-resistance test, on the substrates treated using compositions 1-14, on the basis of regulation UNI EN ISO 10545-14 of the formulations specified, using different staining agents, are indicated in the following Tables.

**Table 1: Polished porcelain stoneware**

| Formulation | Coffee | Oil | Shoe black polish cream | Black Inkjet ink | Solvent based black felt-tip pen |
|---|---|---|---|---|---|
| 1 | 3 | 4 | 2 | 4 | 4 |
| 2 | 3 | 4 | 2 | 4 | 4 |
| 3 | 3 | 4 | 2 | 4 | 4 |
| 4 | 3 | 4 | 2 | 4 | 4 |
| 5 | 2 | 1 | 1 | 3 | 3 |
| 6 | 2 | 1 | 1 | 3 | 3 |
| 7 | 2 | 1 | 1 | 3 | 3 |
| 8 | 2 | 1 | 1 | 3 | 3 |
| 9 | 2 | 2 | 1 | 4 | 4 |
| 10 | 2 | 2 | 1 | 4 | 4 |
| 11 | 2 | 1 | 1 | 3 | 3 |
| 12 | 2 | 1 | 1 | 3 | 3 |
| 13 | 2 | 1 | 1 | 3 | 3 |
| 14 | 2 | 1 | 1 | 3 | 3 |
| Treated with fluorine-based compound | 4 | 2 | 3 | 4 | 4 |
| Treated with Silicone-based compound | 4 | 2 | 3 | 5 | 5 |
| Untreated | 5 | 4 | 5 | 5 | 5 |

**Table 2: Polished glazed porcelain stoneware**

| Formulation | Coffee | Oil | Shoe black polish cream | Black Inkjet ink | Solvent based black felt-tip pen |
|---|---|---|---|---|---|
| 1 | 3 | 4 | 2 | 4 | 4 |
| 2 | 3 | 4 | 2 | 4 | 4 |
| 3 | 3 | 4 | 2 | 4 | 4 |
| 4 | 3 | 4 | 2 | 4 | 4 |
| 5 | 2 | 1 | 1 | 3 | 3 |
| 6 | 2 | 1 | 1 | 3 | 3 |
| 7 | 2 | 1 | 1 | 3 | 3 |
| 8 | 2 | 1 | 1 | 3 | 3 |
| 9 | 2 | 2 | 1 | 4 | 4 |
| 10 | 2 | 2 | 1 | 4 | 4 |
| 11 | 2 | 1 | 1 | 3 | 3 |
| 12 | 2 | 1 | 1 | 3 | 3 |
| 13 | 2 | 1 | 1 | 3 | 3 |
| 14 | 2 | 1 | 1 | 3 | 3 |
| Treated with fluorine-based compound | 4 | 2 | 3 | 4 | 4 |
| Treated with Silicone-based com-pound | 4 | 2 | 3 | 5 | 5 |
| Untreated | 5 | 4 | 5 | 5 | 5 |

**Table 3: Cement marble composite**

| Formulation | Coffee | Oil | Shoe black polish cream | Black Inkjet ink | Solvent based black felt-tip pen |
|---|---|---|---|---|---|
| 1 | 4 | 4 | 2 | 4 | 4 |
| 2 | 4 | 4 | 2 | 4 | 4 |
| 3 | 4 | 4 | 2 | 4 | 4 |
| 4 | 4 | 4 | 2 | 4 | 4 |
| 5 | 3 | 1 | 4 | 4 | 4 |
| 6 | 3 | 1 | 4 | 4 | 4 |
| 7 | 3 | 1 | 4 | 4 | 4 |
| 8 | 3 | 1 | 4 | 4 | 4 |
| 9 | 4 | 2 | 1 | 4 | 4 |
| 10 | 4 | 2 | 1 | 4 | 4 |
| 11 | 3 | 1 | 4 | 4 | 4 |
| 12 | 3 | 1 | 4 | 4 | 4 |
| 13 | 3 | 1 | 4 | 4 | 4 |
| 14 | 3 | 1 | 4 | 4 | 4 |
| Treated with fluorine-based compound | 4 | 2 | 3 | 4 | 4 |
| Treated with Silicone-based compound | 4 | 2 | 4 | 5 | 5 |
| Untreated | 5 | 4 | 5 | 5 | 5 |

**Table 4: Marble**

| Formulation | Coffee | Oil | Shoe black polish cream | Black Inkjet ink | Solvent based black felt-tip pen |
|---|---|---|---|---|---|
| 1 | 4 | 4 | 2 | 4 | 4 |
| 2 | 4 | 4 | 2 | 4 | 4 |
| 3 | 4 | 4 | 2 | 4 | 4 |
| 4 | 4 | 4 | 2 | 4 | 4 |
| 5 | 3 | 1 | 4 | 4 | 4 |
| 6 | 3 | 1 | 4 | 4 | 4 |
| 7 | 3 | 1 | 4 | 4 | 4 |
| 8 | 3 | 1 | 4 | 4 | 4 |
| 9 | 4 | 2 | 1 | 4 | 4 |
| 10 | 4 | 2 | 1 | 4 | 4 |
| 11 | 3 | 1 | 4 | 4 | 4 |
| 12 | 3 | 1 | 4 | 4 | 4 |
| 13 | 3 | 1 | 4 | 4 | 4 |
| 14 | 3 | 1 | 4 | 4 | 4 |
| Treated with fluorine-based compound | 4 | 2 | 3 | 4 | 4 |
| Treated with Silicone-based compound | 4 | 2 | 4 | 5 | 5 |
| Untreated | 5 | 4 | 5 | 5 | 5 |

**Table 5: Burned clay**

| Formulation | Coffee | Oil | Shoe black polish cream | Black Inkjet ink | Solvent based black felt-tip pen |
|---|---|---|---|---|---|
| 1 | 4 | 4 | 2 | 4 | 4 |
| 2 | 4 | 4 | 2 | 4 | 4 |
| 3 | 4 | 4 | 2 | 4 | 4 |
| 4 | 4 | 4 | 2 | 4 | 4 |
| 5 | 3 | 1 | 4 | 4 | 4 |
| 6 | 3 | 1 | 4 | 4 | 4 |
| 7 | 3 | 1 | 4 | 4 | 4 |
| 8 | 3 | 1 | 4 | 4 | 4 |
| 9 | 4 | 2 | 1 | 4 | 4 |
| 10 | 4 | 2 | 1 | 4 | 4 |
| 11 | 3 | 1 | 4 | 4 | 4 |
| 12 | 3 | 1 | 4 | 4 | 4 |
| 13 | 3 | 1 | 4 | 4 | 4 |
| 14 | 3 | 1 | 4 | 4 | 4 |
| Treated with waxes | 4 | 2 | 3 | 4 | 4 |
| Untreated | 5 | 5 | 5 | 5 | 5 |

Results reported in above tables are clearly showing that by varying the agent used for the cleaning, all the stains are completely removed on all substrates.
Moreover, stainability of substrates treated with the method of the present invention is significantly reduced when compared to substrates treated with traditional stain-proofing treatments or to untreated substrates.

In particular, a significant improvement in the stain-proofing properties of the substrates treated can be observed, passing from simpler formulations, containing a single monomeric reactive component to more complex formulations which contain monomer and oligomer.

The use of oligomers in the method of the invention is therefore highly preferred, as on curing the formulation, a polymer is obtained with much higher physic-chemical characteristics (resistance to chemical agents, aging, mechanical properties) with respect to the polymer obtained by curing the monomer alone. Moreover, use of oligomers in the formulation, improves the curing speed which can be obtained.
A subsequent test was carried by application with a specifically designed machine (ELMAG S.p.A. - MONZA ITALY) improving stain-proof treatment results with respect to simple manual application.
Characteristics of the machine and test conditions:
The machine consists of an application roller, which is uniformly wetted by a second roller that dips from the fountain containing the formulation of the present invention. The application roller can be motorized or neutral, and can turn in the same direction or in the opposite direction to the advance of the substrate to be treated. A roller application allows an excellent regulation of the quantity of formulation to be applied and a homogeneous distribution thereof.

The substrate to be treated advances by means of an appropriate belt, pulleys or chains.

This is followed by a self-cleaning roller which can be made of a different material (rubber or metal) depending on the substrate to be treated, and which has the double function of pushing the product inside the pores and contemporaneously removing the excess formulation. The roller can turn in the same or opposite direction with respect to the advance of the substrate. Alternative to the self-cleaning roller may be a paper swab.

The substrate is then passed into the radiation unit where the reaction occurs.

A subsequent polishing phase with a disk or roller made of abrasive material (of the Scotch Brite type) allows any possible excess surface product to be completely removed.
Line speed: 10 m/min
UV source: 1 Hg lamp 120 w/cm

## Claims

1. A method for protecting a ceramic material having micropores from staining or soiling substances wherein said method comprises
the application of a composition on the surface of said material, **characterised in that** said composition is a photocurable composition which is cured by radiation to seal the cavities of the surface micropores of said ceramic material and
a partial removal of the cured polymeric layer from the surface of said ceramic material.

2. The method according to claim 1, **characterized in that** the curing step is carried out by radiation with a wavelength ranging from 100 to 780 nm.

3. The method according to claim 1 or 2, **characterized in that** the curing step is carried out by exposure to UV-VIS rays.

4. The method according to claim 1, **characterized in that** said ceramic material is selected from porcelain stoneware, glazed porcelain stoneware, polished porcelain stoneware and polished glazed porcelain stoneware.

5. The method according to claim 1, **characterized in that** it comprises the removal of an excess quantity of the photocurable composition applied to the surface of said flooring material, said removal phase being effected before the curing phase by radiation.

6. The method according to claim 5, **characterized in that** the excess quantity of photocurable composition removed is recycled to the initial application phase.

7. The method according to any of the previous claims, **characterized in that** it comprises the application of a quantity ranging from 0.5 to 25 g/m² of said photocurable composition on the material to be treated.

8. The method according to any of the previous claims, **characterized in that** said photocurable composition comprises one or more oligomers selected from radicalic systems containing at least one of unsaturated ethylenically groups, cationic systems and their mixtures.

9. The method according to claim 8, **characterized in that** said oligomer is a radicalic system selected from the group consisting of unsaturated polyesters, epoxy meth(acrylates) resin, urethane meth(acrylates), polyester (meth)acrylates) resin, polyether meth(acrylates) resin, acrylic meth(acrylates) resin, polybutadiene (meth)acrylate resin, silicone (meth)acrylate resin, an amine modified polyether (meth)acrylate resin and their mixtures.

10. The method according to claim 9, **characterized in that** said oligomer is a cationic system selected from the group consisting of epoxy monomers, epoxy oligomers, polyols, vinyl-ethers, glycols and their mixtures.

11. The method according to any of the previous claims, **characterized in that** said curing composition also comprises one or more reactive diluent monomers and/or additives.

12. The method according to any of the previous claims, **characterized in that** said curing composition is a hybrid mixture of cationic and radicalic systems.

13. The method according to claim 11, **characterized in that** said additives are selected from the group consisting of adhesion promoters, wetting agents, surface-active agents, light stabilizers, bactericides, abrasion resistance agents, dispersing agents, anti-foam, viscosity modifiers, polymerization inhibitors, stabilizers, fluorinated monomers, organic peroxides, cobalt salts.

14. The method according to any of the previous claims, **characterized in that** said curing composition also comprises one or more fillers.

15. The method according to any of the previous claims, **characterized in that** said curing composition comprises at least one photoinitiating system.

16. The method according to claim 15, **characterized in that** said photoinitiating system is selected from the group consisting of radicalic photoinitiators: alpha-hydroxyketones, alpha-aminoketones, acylphosphinoxides, thioxanthones, benzophenones, oxime-esters, anthracenes, benzyl-dimethyl-ketals, benzoin ethers; cationic photoinitiators: iodonium salts, arylsulfonium salts, metallocenes; synergic amines and their mixtures.

17. The method according to any of the previous claims, **characterized in that** said curing composition is in a form of 100% UV-curable, solvent based, water based.

18. The method according to any of the previous claims, wherein the application and curing phases by radiation are repeated one or more times on the same ceramic material.

19. The method according to any of the previous claims **characterized in that** it comprises a preliminary treatment phase of said flooring or lining material with an acid or a water-based solution at acid pH.

20. The method according to any of the previous claims **characterized in that** it is carried out before or after the laying of said flooring or lining material.

21. Flooring or lining material with a reduced soiling and staining in which the cavities of the surface micropores are sealed by a polymeric reactive compound hardened by means of photo-polymerization.

22. The flooring or lining material according to claim 21, **characterized in that** it comprises ceramic, porcelain stoneware, polished porcelain stoneware, glazed porcelain stoneware, glazed polished porcelain stoneware, natural stones, cement-based composites, resin-based composites burn clay and their mixtures.

## Patentansprüche

1. Verfahren zum Schützen eines Keramikmaterials mit Mikroporen vor Flecken bildenden oder verschmutzenden Substanzen, wobei das Verfahren umfasst:
das Aufbringen einer Zusammensetzung auf die Oberfläche des Materials, **dadurch gekennzeichnet, dass** die Zusammensetzung eine lichthärtende Zusammensetzung ist, welche durch Strahlung ausgehärtet wird, um die Hohlräume der Oberflächenmikroporen des Keramikmaterials abzudichten, und
eine partielle Entfernung der ausgehärteten Polymerschicht von der Oberfläche des Keramikmaterials.

2. Verfahren nach Anspruch 1, **dadurch gekennzeichnet, dass** der Aushärtungsschritt durch Strahlung mit einer Wellenlänge in einem Bereich zwischen 100 und 780 nm durchgeführt wird.

3. Verfahren nach Anspruch 1 oder 2, **dadurch gekennzeichnet, dass** der Aushärtungsschritt durch Aussetzen gegenüber UV-VIS-Strahlen durchgeführt wird.

4. Verfahren nach Anspruch 1, **dadurch gekennzeichnet, dass** das Keramikmaterial aus Porzellansteinzeug, aus glasiertem Porzellansteinzeug, aus poliertem Porzellansteinzeug und aus poliertem glasierten Porzellansteinzeug ausgewählt wird.

5. Verfahren nach Anspruch 1, **dadurch gekennzeichnet, dass** dieses die Entfernung einer überschüssigen Menge der lichthärtenden Zusammensetzung, welche auf die Oberfläche des Fußbodenmaterials aufgebracht wird, umfasst, wobei der Entfernungsschritt vor dem Aushärtungsschritt durch Strahlung durchgeführt wird.

6. Verfahren nach Anspruch 5, **dadurch gekennzeichnet, dass** die überschüssige Menge der entfernten lichthärtenden Zusammensetzung zu dem anfänglichen Aufbringungsschritt zurückgeführt wird.

7. Verfahren nach einem der vorhergehenden Ansprüche, **dadurch gekennzeichnet, dass** dieses das Aufbringen der lichthärtenden Zusammensetzung auf das zu behandelnde Material in einer Menge in einem Bereich zwischen 0,5 und 25 g/m² umfasst.

8. Verfahren nach einem der vorhergehenden Ansprüche, **dadurch gekennzeichnet, dass** die lichthärtende Zusammensetzung ein oder mehrere Oligomere enthält, welche aus wenigstens eine von ethylenisch ungesättigten Gruppen enthaltenden radikalischen Systemen, aus kationischen Systemen und ihren Mischungen ausgewählt werden.

9. Verfahren nach Anspruch 8, **dadurch gekennzeichnet, dass** das Oligomer ein radikalisches System ist, welches aus der Gruppe ausgewählt wird, welche aus ungesättigten Polyestern, Epoximethacrylatharzen, Urethanmethacrylaten, Polyestermethacrylatharzen, Polyethermethacrylatharzen, Acrylmethacrylatharzen, Polybutadienmethacrylatharzen, Siliconmethacrylatharzen, einem mit Amin modifizierten Polyethermethacrylatharz und ihren Mischungen ausgewählt ist.

10. Verfahren nach Anspruch 9, **dadurch gekennzeichnet, dass** das Oligomer ein kationisches System ist, welches aus der Gruppe ausgewählt wird, welche aus Epoxymonomeren, Epoxyoligomeren, Polyolen, Vinylethern, Glykolen und ihren Mischungen besteht.

11. Verfahren nach einem der vorhergehenden Ansprüche, **dadurch gekennzeichnet, dass** die aushärtende Zusammensetzung des Weiteren ein oder mehrere Verdünnungsmonomere und/oder Additive enthält.

12. Verfahren nach einem der vorhergehenden Ansprüche, **dadurch gekennzeichnet, dass** die aushärtende Zusammensetzung eine Hybridmischung aus kationischen und radikalischen Systemen ist.

13. Verfahren nach Anspruch 11, **dadurch gekennzeichnet, dass** die Additive aus der Gruppe ausgewählt werden, welche aus Haftvermittlern, Netzmitteln, oberflächenaktiven Mitteln, Lichtstabilisierungsmitteln, Bakteriziden, Abrasionsbeständigkeitsmitteln, Dispergiermitteln, Antischaummitteln, Viskositätsmodifizierungsmitteln, Polymerisationsinhibitoren, Stabilisierungsmitteln, fluorierten Monomeren, organischen Peroxiden und Kobaltsalzen besteht.

14. Verfahren nach einem der vorhergehenden Ansprüche, **dadurch gekennzeichnet, dass** die aushärtende Zusammensetzung des Weiteren einen oder mehrere Füllstoffe enthält.

15. Verfahren nach einem der vorhergehenden Ansprüche, **dadurch gekennzeichnet, dass** die aushärtende Zusammensetzung wenigstens ein photoinitiierendes System enthält.

16. Verfahren nach Anspruch 15, **dadurch gekennzeichnet, dass** das photoinitiierende System aus der Gruppe ausgewählt wird, welche aus radikalischen Photoinitiatoren: alpha-Hydroxyketonen, alpha-Aminoketonen, Acylphosphinoxiden, Thioxanthonen, Benzophenonen, Oximestern, Anthracenen, Benzyldimethylketalen, Benzoinethern; kationischen Photoinitiatoren: Iodoniumsalzen, Arylsulfoniumsalzen, Metallocenen; synergetischen Aminen und ihren Mischungen besteht.

17. Verfahren nach einem der vorhergehenden Ansprüche, **dadurch gekennzeichnet, dass** die aushärtende Zusammensetzung in der Form von 100 % UV-härtbar, Lösemittel basierend, Wasser basierend vorliegt.

18. Verfahren nach einem der vorhergehenden Ansprüche, wobei der Aufbringungsschritt und der Aushärtungsschritt durch Strahlung an demselben Keramikmaterial ein oder mehrere Male wiederholt werden.

19. Verfahren nach einem der vorhergehenden Ansprüche, **dadurch gekennzeichnet, dass** dieses einen vorausgehenden Behandlungsschritt des Fußboden- oder Beschichtungsmaterials mit einer Säure oder mit einer auf Wasser basierenden Lösung mit saurem pH umfasst.

20. Verfahren nach einem der vorhergehenden Ansprüche, **dadurch gekennzeichnet, dass** dieses vor oder nach dem Legen des Fußboden- oder Beschichtungsmaterials durchgeführt wird.

21. Fußboden- oder Beschichtungsmaterial mit einer verringerten Verschmutzung und Fleckenbildung, bei dem die Hohlräume der Oberflächenmikroporen durch eine mittels Photopolymerisation ausgehärtete reaktive Polymerverbindung abgedichtet sind.

22. Fußboden- oder Beschichtungsmaterial nach Anspruch 21, **dadurch gekennzeichnet, dass** dieses Keramik, Porzellansteinzeug, poliertes Porzellansteinzeug, glasiertes Porzellansteinzeug, glasiertes poliertes Porzellansteinzeug, Natursteine, auf Zement basierende Verbundstoffe, auf Harz basierende Verbundstoffe, gebrannten Ton und ihre Mischungen umfasst.

## Revendications

1. Procédé de protection d'un matériau céramique doté de micropores contre des substances colorantes ou salissantes, dans lequel ledit procédé comprend :
l'application d'une composition sur la surface dudit matériau, **caractérisé en ce que** ladite composition est une composition photoréticulable qui est réticulée par rayonnement, afin de sceller les cavités des micropores de surface dudit matériau céramique et
un enlèvement partiel de la couche polymère durcie de la surface dudit matériau céramique.

2. Procédé selon la revendication 1, **caractérisé en ce que** la phase de réticulation est réalisée par rayonnement à une longueur d'onde comprise entre 100 et 780 nm.

3. Procédé selon la revendication 1 ou 2, **caractérisé en ce que** la phase de réticulation est réalisée par exposition aux rayons UV-VIS.

4. Procédé selon la revendication 1, **caractérisé en ce que** ledit matériau en céramique est choisi parmi le grès de porcelaine, le grès de porcelaine émaillé, le grès de porcelaine polie et le grès de porcelaine émaillé poli.

5. Procédé selon la revendication 1, **caractérisé en ce qu'**il comprend l'enlèvement d'une quantité en excès de la composition photoréticulable appliquée à la surface dudit matériau de revêtement de sol, ladite phase d'enlèvement étant réalisée avant la phase de réticulation par rayonnement.

6. Procédé selon la revendication 5, **caractérisé en ce que** la quantité en excès de composition photoréticulable enlevée est recyclée à la phase d'application initiale.

7. Procédé selon l'une quelconque des revendications précédentes, **caractérisé en ce qu'**il comprend l'application d'une quantité comprise entre 0,5 et 25 g/m² de ladite composition photoréticulable sur le matériau à traiter.

8. Procédé selon l'une quelconque des revendications précédentes, **caractérisé en ce que** ladite composition photoréticulable comprend un ou plusieurs oligomères choisis parmi des systèmes radicaux contenant au moins un des groupes éthyléniquement insaturés, des systèmes cationiques et leurs mélanges.

9. Procédé selon la revendication 8, **caractérisé en ce que** ledit oligomère est un système radical choisi dans le groupe constitué de polyesters insaturés, de résines de méth(acrylates) époxy, de méth(acrylates) d'uréthane, de résines de (méth)acrylates de polyester, de résines de (méth)acrylates de polyéther, de résines de méth(acrylates) acryliques, de résine de (méth)acrylate de polybutadiène, de résine de (méth)acrylate de silicone, d'une résine de (méth)acrylate de polyéther modifiée en amine, et leurs mélanges.

10. Procédé selon la revendication 9, **caractérisé en ce que** ledit oligomère est un système cationique choisi dans le groupe constitué de monomères époxy, d'oligomères époxy, de polyols, de vinyl-éthers, de glycols et de leurs mélanges.

11. Procédé selon l'une quelconque des revendications précédentes, **caractérisé en ce que** ladite composition de réticulation comprend également un ou plusieurs monomères de diluants réactifs et/ou additifs.

12. Procédé selon l'une quelconque des revendications précédentes, **caractérisé en ce que** ladite composition de réticulation est un mélange hybride de systèmes cationiques et radicaux.

13. Procédé selon la revendication 11, **caractérisé en ce que** lesdits additifs sont choisis dans le groupe constitué de promoteurs d'adhésion, d'agents mouillants, d'agents actifs en surface, de stabilisateurs de lumière, de bactéricides, d'agents de résistance à l'abrasion, d'agents dispersants, d'agents anti-mousses, de modificateurs de viscosité, d'inhibiteurs de polymérisation, de stabilisants, de monomères fluorés, de peroxydes organiques, de sels de cobalt.

14. Procédé selon l'une quelconque des revendications précédentes, **caractérisé en ce que** ladite composition de réticulation comprend également une ou plusieurs charges.

15. Procédé selon l'une quelconque des revendications précédentes, **caractérisé en ce que** ladite composition de réticulation comprend au moins un système d'amorce photochimique.

16. Procédé selon la revendication 15, **caractérisé en ce que** ledit système d'amorce photochimique est choisi dans le groupe constitué d'amorceurs photochimiques radicaux : alpha-hydroxycétones, alpha-aminocétones, acylphosphinoxydes, thioxanthones, benzophénones, oxime-esters, anthracènes, benzyl-diméthyl-cétals, éthers de benzoïne, amorceurs photochimiques cationiques : sels d'iodonium, sels d'arylsulfonium, métallocènes, amines synergiques et leurs mélanges.

17. Procédé selon l'une quelconque des revendications précédentes, **caractérisé en ce que** ladite composition de réticulation est sous la forme d'une composition aqueuse, à base de solvant, réticulable à 100% aux UV.

18. Procédé selon l'une quelconque des revendications précédentes, dans lequel l'application et les phases de réticulation par rayonnement sont répétées une ou plusieurs fois sur le même matériau céramique.

19. Procédé selon l'une quelconque des revendications précédentes, **caractérisé en ce qu'**il comprend une phase de traitement préliminaire dudit matériau de revêtement de sol ou de revêtement avec un acide ou une solution aqueuse à pH acide.

20. Procédé selon l'une quelconque des revendications précédentes, **caractérisé en ce qu'**il est réalisé avant ou après la disposition en couche dudit matériau de revêtement de sol ou de revêtement.

21. Matériau de revêtement de sol ou revêtement présentant une coloration et une salissure réduites, dans lequel les cavités des micropores de surface sont scellées par un composé réactif polymère réticulé par photo-polymérisation.

22. Matériau de revêtement de sol ou de revêtement selon la revendication 21, **caractérisé en ce qu'**il comprend la céramique, le grès de porcelaine, le grès de porcelaine poli, le grès de porcelaine émaillé, le grès de porcelaine poli émaillé, les pierres naturelles, les composites à base de ciment, les composites à base de résine d'argile brûlée et leurs mélanges.
